# EUROPEAN PATENT SPECIFICATION

(11) **EP 3 851 370 B1**
(45) Date of publication and mention of the grant of the patent: **01.05.2024**
(21) Application number: 20844271.5
(22) Date of filing: 17.03.2020
(51) Int. Cl.: B64C 1/10

(54) **PRESSURE BULKHEAD**
DRUCKSCHOTT
CLOISON ÉTANCHE

(30) Priority: 24.07.2019 ES 201931273 U
(43) Date of publication of application: 21.07.2021
(73) Proprietor: CITD Engineering & Technologies SL, 28906 Getafe - Madrid (ES)
(72) Inventor: MAESTRE GONZALEZ, Cristina, 28906 GETAFE-MADRID (ES); GARCIA-COSIO CARMENA, Marta, 28906 GETAFE-MADRID (ES)
(74) Representative: Del Valle Valiente, Sonia
(86) International application number: PCT/ES2020/070184
(87) International publication number: WO 2021/014033

(56) References cited:
- EP-A1- 2 098 448
- EP-A1- 2 098 448
- EP-A1- 2 676 787
- EP-A1- 3 064 429
- EP-A1- 3 064 429
- EP-A2- 0 847 916
- EP-A2- 0 847 916
- EP-A2- 2 886 446
- CN-U- 205 906 193
- CN-U- 205 906 193
- US-A1- 2007 164 152
- US-A1- 2007 164 152
- US-A1- 2017 057 668

## Description

### OBJECT OF THE INVENTION

The present invention refers to a bulkhead for separating areas at different pressures, a very common use case in aircraft.

### BACKGROUND OF THE INVENTION

Space launch vehicles have several pressure membranes which separate the environment of the launch vehicle from the environment of the satellite with requirements for cleaning the dust from the propulsion of the launch vehicle in optical instruments of the satellite. In commercial aircraft, there are several walls or bulkheads subject to differential pressures, due to the effect it has on both sides thereof. The best shape for these bulkheads, in terms of architecture and space optimisation, is a flat surface, but the stiffness and strength capacity of flat shapes are not good enough, needing to be reinforced in order to meet the requirements and specifications. Making them with a concave geometry in order to better withstand pressure and using reinforcements is the general solution today. However, this trend implies an increase in mass and volume. EP 2 886 446 A2 discloses a pressure bulkhead for an aircraft with a composite laminate body having a general bulging and concave and convex reliefs arranged thereon.

This drawback is solved with the bulkhead of the invention.

### DESCRIPTION OF THE INVENTION

The pressure bulkhead of the invention has an essentially laminar configuration, achieving high strength in combination with a low weight and a very small volume, which makes it ideal for use as a pressure bulkhead, being able to withstand considerable pressure differentials on both sides.

According to the claimed invention, a pressure bulkhead for an aircraft as set out in claim 1 is provided.

With this design it is possible, on the one hand, to create a bulkhead that incorporates stiffening areas in its own structure without needing additional ribs, and on the other hand, to provide a suitable geometry for the selected production method. By being globally concave (or convex depending on from where it is observed), this configuration is stiffer than something flat for a pressure differential. While on said base geometry (which is bulged) the concave-convex alternation creates the stiffening areas in the form of built-in ribs, the absence of negatives (areas which do not have the same demoulding direction as the rest) greatly facilitates production by means of female tooling. The geometric optimisation makes it possible to save on mass and improve the volume of the part, such that, for example for civil uses, it can enable an additional row of seats to be incorporated, with the consequent savings and benefits for companies in the aeronautical sector.

Moreover, costs are further reduced thanks to economies of scale, due to the number of parts to be manufactured per year. Actually, it is being laminated, and this process must be industrialised by means of infusion, pressurised production, etc.

The improvement provided by this concept of a pressure bulkhead is considerable. Saving on weight is critical for any aircraft, this being closely related to the fuel savings and load capacity. Additionally, the increase in the free volume in the aircraft improves accessibility and affects the load capacity. Both are key improvements in the aeronautical sector, positively impacting sustainability and the interaction thereof with the environment.

### BRIEF DESCRIPTION OF THE DRAWINGS

Figure 1 shows a perspective view of the pressure bulkhead of the invention.
Figure 2 shows a front view of the pressure bulkhead of the invention.
Figure 3 shows a side view of the pressure bulkhead of the invention.

### DESCRIPTION OF A PRACTICAL EMBODIMENT OF THE INVENTION

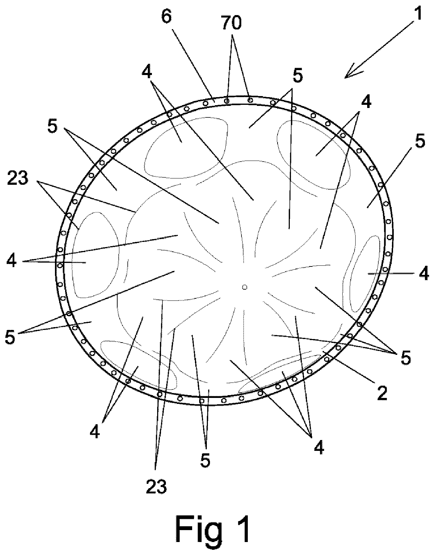

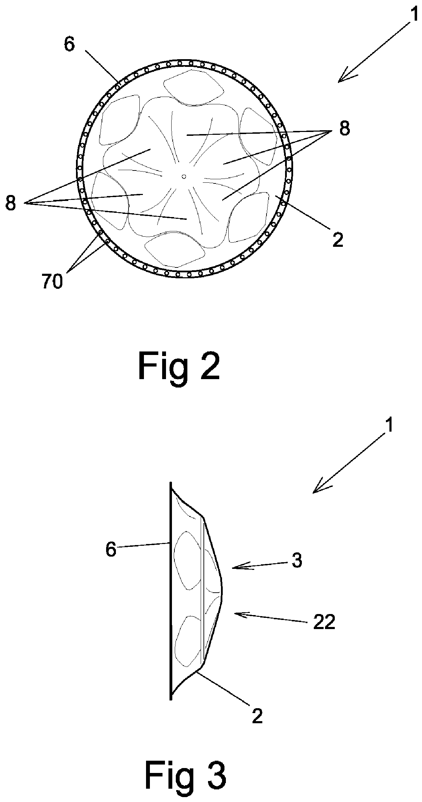

The pressure bulkhead (1) of the invention comprises:
- A laminate body (2) made of composite material with a polymer matrix reinforced with continuous fibres in a laminate arrangement,
- A general bulging (3) (see Fig. 3) of the laminate body (2), which extends along a face (22) thereof,
- Concave reliefs (4) and convex reliefs (5) alternately arranged on the laminate body (2) (see Fig. 1), defining stiffer areas (23) of change from convexity to concavity acting as stiffeners (said areas are represented in the figures with thin lines, but they are not really physical edges, they are marked only for a better understanding of the invention),
- The concave reliefs (4) and convex reliefs (5) having a maximum angular width of 180 degrees to prevent negatives in the production mould and to facilitate demoulding; and
- A rigid interface (6) embedded in the laminate body (2), for securing the bulkhead, and provided with means for securing to the aircraft structure (in this example of the invention the holes (70) would be for the passage of screws which are not shown).

Preferably, the concave reliefs (4) and the convex reliefs (5) alternately placed have an arrangement inspired by biostructural shapes; in other words, a strong shape similar to those implemented by living beings in the laminar portions thereof and which have a strength demonstrated and improved by evolution itself (for example, radial shapes such as flower petals, polygonal shapes such as honeycombs, etc.). In this preferred example, the arrangement in the shape of a biostructure comprises a radial configuration in the shape of flower petals (8) (see Fig. 2), which radiates from the geometric centre growing in radius, which makes it possible to meet all the strength requirements without additional reinforcements.

Regarding the nature and composition of the raw materials thereof, the laminate will be made up of a matrix based on thermosetting polymer resin, preferably vinyl ester, while the fibres could be any material (carbon, glass or aramid).

Having sufficiently described the nature of the invention, in addition to the manner of applying it in practice, it must hereby be stated that the aforementioned arrangements indicated and represented in the attached drawings are susceptible to modifications without departing from the scope defined by the appended claims.

## Claims

1. A pressure bulkhead (1) for an aircraft comprising:
- a laminate body (2) made of composite material with a polymer matrix reinforced with fibres in a laminate arrangement,
- a general bulging (3) of the laminate body (2), which extends along a face (22) thereof,
- concave reliefs (4) and convex reliefs (5) arranged on the laminate body (2),
- the concave reliefs (4) and convex reliefs (5) having a maximum angular width of 180 degrees to prevent negatives in the production mould and to facilitate demoulding; and
- a rigid interface (6) embedded in the laminate body (2), for securing the bulkhead, and provided with means for securing to the aircraft structure.
**characterized in that** the concave reliefs (4) and the convex reliefs (5) are alternately arranged on the laminate body (2), adjacent ones to the others, and define stiffer areas (23) of change from convexity to concavity that act as stiffeners.

2. The pressure bulkhead (1) according to claim 1, **wherein** the arrangement comprises a radial configuration in the shape of petals (8).

3. The pressure bulkhead (1) according to any of the preceding claims, **wherein** the matrix is made of polymer resin.

4. The pressure bulkhead (1) according to any of the preceding claims, **wherein** the fibres are selected from:
- Carbon fibre,
- Fibreglass,
- Aramid fibre.

5. The pressure bulkhead (1) according to claim 4, wherein the laminate body (2) is made of carbon fibre with a vinyl ester matrix.

## Patentansprüche

1. Ein Druckschott (1) für ein Flugzeug, umfassend:
- einem Laminatkörper (2), der aus Verbundwerkstoff mit einer mit Fasern in Laminateinrichtung verstärkten Polymermatrix hergestellt ist,
- eine allgemeine Ausbuchtung (3) des Laminatkörpers (2), die sich entlang einer Fläche (22) desselben erstreckt,
- auf dem Laminatkörper (2) eingerichtete konkave Reliefs (4) und konvexe Reliefs (5),
- wobei die konkaven Reliefs (4) und konvexen Reliefs (5) eine maximale Winkelbreite von 180 Grad aufweisen, um Negative in der Produktionsform zu verhindern und das Entformen zu erleichtern; und
- eine starre Schnittstelle (6), die in den Laminatkörper (2) eingebettet ist, um die Trennwand zu befestigen, und die mit Mitteln zum Befestigen an der Flugzeugstruktur versehen ist,
**dadurch gekennzeichnet, dass** die konkaven Reliefs (4) und die konvexen Reliefs (5) abwechselnd auf dem Laminatkörper (2) aneinandergrenzend eingerichtet sind und steifere Übergangsbereiche (23) von Konvexität zu Konkavität definieren, die als Versteifungen wirken.

2. Druckschott (1) nach Anspruch 1, **wobei** die Einrichtung eine radiale Konfiguration in Form von Blütenblättern (8) umfasst.

3. Druckschott (1) nach einem der vorstehenden Ansprüche, **wobei** die Matrix aus Polymerharz hergestellt ist.

4. Druckschott (1) nach einem der vorstehenden Ansprüche, **wobei** die Fasern ausgewählt werden aus:
- Kohlenstofffaser,
- Glasfaser,
- Aramidfaser.

5. Druckschott (1) nach Anspruch 4, wobei der Laminatkörper (2) aus Kohlenstofffaser mit einer Vinylestermatrix hergestellt ist.

## Revendications

1. Cloison sous pression (1) pour un aéronef comprenant :
- un corps stratifié (2) constitué de matériau composite avec une matrice polymère renforcée de fibres selon un agencement stratifié,
- un renflement général (3) du corps stratifié (2), qui s'étend le long d'une face (22) de celui-ci,
- des reliefs concaves (4) et des reliefs convexes (5) agencés sur le corps stratifié (2),
- les reliefs concaves (4) et les reliefs convexes (5) ayant une largeur angulaire maximale de 180 degrés pour éviter les négatifs dans le moule de production et faciliter le démoulage ; et
- une interface rigide (6) incorporée dans le corps stratifié (2), pour sécuriser la cloison, et munie de moyens de sécurisation à la structure de l'aéronef,
**caractérisée en ce que** les reliefs concaves (4) et les reliefs convexes (5) sont agencés en alternance sur le corps stratifié (2), adjacents les uns aux autres, et définissent des zones plus rigides (23) de passage de la convexité à la concavité qui agissent comme des raidisseurs.

2. Cloison sous pression (1) selon la revendication 1, **dans laquelle** l'agencement comprend une configuration radiale en forme de pétales (8).

3. Cloison sous pression (1) selon l'une quelconque des revendications précédentes, **dans laquelle** la matrice est en résine polymère.

4. Cloison sous pression (1) selon l'une quelconque des revendications précédentes, **dans laquelle** les fibres sont choisies parmi :
- fibre de carbone,
- fibre de verre,
- fibre d'aramide.

5. Cloison sous pression (1) selon la revendication 4, dans laquelle le corps stratifié (2) est constitué de fibre de carbone avec une matrice en ester vinylique.
